# EUROPÄISCHE PATENTSCHRIFT

(11) **EP 3 012 093 B1**
(45) Veröffentlichungstag und Bekanntmachung des Hinweises auf die Patenterteilung: **05.04.2017**
(21) Anmeldenummer: 15189832.7
(22) Anmeldetag: 14.10.2015
(51) Int. Cl.: B29C 70/34, B29C 53/56, F16F 1/368, B29C 70/32, B29C 70/06, B32B 37/00, B32B 37/10, B32B 38/18, B32B 38/00, B32B 5/26, B29L 31/00, B29K 105/12

(54) **VERFAHREN UND ANORDNUNG ZUR HERSTELLUNG EINER BLATTFEDER**
METHOD AND ASSEMBLY FOR MANUFACTURING A FLAT SPRING
PROCEDE ET SYSTEME DE FABRICATION D'UN RESSORT A LAME

(30) Priorität: 23.10.2014 DE 102014115461
(43) Veröffentlichungstag der Anmeldung: 27.04.2016
(73) Patentinhaber: Benteler SGL GmbH & Co. KG, 33102 Paderborn (DE)
(72) Erfinder: Aubele, Tobias, Mittelstetten (DE); Müller, Ulrich, 86462 Langweid am Lech (DE); Paulus, Hannah, 86650 Wemding (DE); Steinle, Andreas, 86405 Meitingen (DE); Wohletz, Bernd, 86405 Meitingen (DE); Wojtczyk, Ralph, Wertingen (DE)
(74) Vertreter: Griepenstroh, Jörg

(56) Entgegenhaltungen:
- DE-A1-102008 028 441
- GB-A- 2 113 599
- GB-A- 2 131 347
- US-A- 3 142 598

## Beschreibung

Die vorliegende Erfindung betrifft ein Verfahren zur Herstellung einer Blattfeder aus einem Faserverbundwerkstoff sowie eine Anordnung zur Herstellung einer Blattfeder aus einem Faserverbundwerkstoff nach den Merkmalen der unabhängigen Patentansprüche.

Blattfedern aus Faserverbundwerkstoff spielen im modernen Automobilbau eine wichtige Rolle. Durch die Kombination von thermoplastischen oder duroplastischen Kunststoffen als Matrixmaterial mit Fasermaterialien aus Glas, Kohlenstoff und dergleichen kann eine erhebliche Gewichtseinsparung kreiert werden, wodurch umweltfreundlich ein geringerer Kraftstoffverbrauch einhergeht.

Bei der Herstellung von Blattfedern aus Faserverbundwerkstoff werden unterschiedliche Wege beschritten. Beim Resin Transfer Moulding (RTM), wie beispielsweise in der DE 10 2011 012 654 A1 beschrieben, wird ein trockenes Blattfederhalbzeug in einen Formhohlraum eingelegt und das Matrixmaterial in den Formhohlraum injiziert. Das Matrixmaterial durchtränkt das Blattfederhalbzeug und wird unter Druck und Temperatur ausgehärtet. Entsprechende RTM-Werkzeuge sind allerdings aufwändig und kostspielig. Zudem besteht die Gefahr, dass die Blattfederhalbzeuge nicht vollständig durchtränkt werden und die so entstehenden Trockenstellen die Lebensdauer der Blattfedern herabsetzen.

In einem anderen Verfahren werden einzelne Lagen von zugeschnittenem, vorimprägniertem Fasermaterial teilweise manuell aufeinander gestapelt und das so entstandene Blattfederhalbzeug in einem Pressenwerkzeug verpresst und ausgehärtet. Hier besteht der Nachteil insbesondere darin, dass dieser Prozess sehr zeitaufwändig ist, so dass ein adäquater Einsatz in einer Serienproduktion immer auch mit langen Taktzeiten und hohen Preisen für das Endprodukt verbunden ist. Weiterhin ist es bekannt, Blattfedern mittels einer geeigneten Vorrichtung zu wickeln. Dabei werden zumeist zwei oder mehrere Blattfederhalbzeuge durch einen Wickelvorgang auf einem Wickelkern erzeugt. Insbesondere die EP 0 005 916 A1 beschreibt ein Verfahren und eine Vorrichtung zur Herstellung einer Blattfeder aus einem Faserverbundwerkstoff, in der mit Matrixharz vorimprägniertes Bandmaterial aus Faserwerkstoff auf einen Wickelkern aufgewickelt wird. Bei dem Bandmaterial kann es sich um ein Fasertape oder dergleichen handeln. Die fertigen Blattfederhalbzeuge werden dann von dem Wickelkern abgenommen und in einer Presse unter Beaufschlagung mit Druck und Temperatur zur fertigen Blattfeder verarbeitet.

US3142598 offenbart ein Verfahren zum Herstellen einer Blattfeder
aus einem Faserverbundwerkstoff durch Aufwickeln eines Bandmaterials auf
einen Wickelkern und eine Anordnung zum Herstellen einer Blattfeder.

Durch den Einsatz eines Wickelverfahrens kann eine Blattfeder mit für eine Serienproduktion geeigneten Taktzeiten gefertigt werden. Darüber hinaus sind vorimprägnierte Bandmaterialien sehr einfach zu handhaben. Allerdings besteht bei dem vorgestellten Verfahren die Gefahr, dass bei der Herstellung des Blattfederhalbzeuges einzelne benachbarte Lagen des Fasermaterials nicht vollflächig aneinander haften. Dies kann zu Fehlstellen in der fertigen Blattfeder und folglich zur Delaminierung der Faserschichten und einer starken Verkürzung der Lebensdauer der Blattfeder führen.

Es ist damit die Aufgabe der Erfindung, die aus dem Stand der Technik bekannten Verfahren und Anordnungen zur Herstellung einer Blattfeder aus Verbundmaterial weiterzubilden und ein Verfahren und eine Anordnung bereit zu stellen, durch die eine kostengünstige und haltbare Blattfeder bei Erreichung geringer Taktzeiten für den Produktionsprozess erzeugt werden kann.

Der verfahrenstechnische Teil der Aufgabe wird gelöst durch ein Verfahren gemäß den Merkmalen von Patentanspruch 1. Besondere Ausgestaltungen der Erfindung sind Gegenstand der darauf rückbezogenen Unteransprüche 2 bis 13.

Der anordnungstechnische Teil der Aufgabe wird gelöst durch eine Anordnung mit den Merkmalen von Patentanspruch 14. Besondere Ausgestaltungen der Anordnung sind Gegenstand der auf Anspruch 14 rückbezogenen Unteransprüche 15 bis 19.

Die Erfindung betrifft ein Verfahren zum Herstellen einer Blattfeder aus einem Faserverbundwerkstoff mit folgenden Verfahrensschritten:
- Bereitstellen von mit Matrixharz vorimprägniertem Bandmaterial aus Faserwerkstoff,
- Herstellen eines Blattfederhalbzeuges durch Aufwickeln des Bandmaterials unter Spannung auf einen Wickelkern, wobei auf dem Wickelkern in Wickelrichtung umfangsseitig zumindest zwei Kavitäten zur Formgebung des Blattfederhalbzeuges ausgebildet sind,
- Andrücken des Bandmaterials durch ein Andruckmittel zum adhäsiven Verbinden benachbarter Lagen des Bandmaterials auf dem Wickelkern und zum Entfernen von Lufteinschlüssen zwischen benachbarten Lagen des Bandmaterials,
- Entnahme der Blattfederhalbzeuge aus den Kavitäten des Wickelkerns,
- Herstellen einer Blattfeder durch Verpressen des Blattfederhalbzeuges unter Aushärtung des Matrixharzes.

Das Bandmaterial kann auf unterschiedliche Art und Weise gestaltet sein. Es kann als breites Bündel von einzelnen Fasern vorliegen, die parallel zueinander ausgerichtet sind und nur durch wenige quer zur Vorzugsrichtung orientierte Fasern zusammen gehalten werden. Es ist auch möglich, dass die einzelnen Fasern des Fasermaterials miteinander verflochten oder verwoben sind. Es kann sich um ein einzelnes Band handeln, dessen Breite mit der Breite des herzustellenden Blattfederhalbzeugs übereinstimmt, oder um mehrere Bänder, die dann parallel nebeneinander oder auch übereinander auf dem Wickelkern abgelegt werden. Dem Fachmann sind in diesem Zusammenhang Begriffe wie "Tape", "Towpreg" oder "Roving" bekannt.

Bei dem Fasermaterial handelt es sich um Fasern aus Glas, Kohlenstoff, Aramid oder andere bei der Herstellung von Faserverbundbauteilen üblichen Materialien.

Die konkrete Ausgestaltung des Bandmaterials aus Faserwerkstoff hängt von den Anforderungen ab, die an das zu fertigende Bauteil gestellt werden. Entsprechend dieser Anforderungen werden das Bandmaterial und der Faserwerkstoff ausgewählt.

Gemeinsam ist den verwendeten Bandmaterialien immer, dass sie mit einem Matrixharz vorimprägniert sind. Solche Fasermaterialien sind auch unter dem Begriff "Prepregs" bekannt. Bei dem Matrixharz kann es sich um thermoplastische oder duroplastische Materialien handeln. Durch das Vorimprägnieren ist das Matrixharz bereits in dem Blattfederhalbzeug vorhanden und muss nicht, wie bei einem RTM-Verfahren, aufwändig in eine trockene Vorform injiziert werden. Vorteilhaft ist auch die gute Handhabbarkeit dieser Materialien in der Produktion. Sie sind bei Raumtemperatur gewöhnlich leicht klebrig, das Matrixharz ist aber nicht so flüssig, dass die Produktionsstätte durch Harzspritzer verunreinigt wird. Diese Problematik tritt insbesondere bei Nasswickelverfahren auf, wo häufige Reinigungsarbeiten notwendig sind, die wiederum die Stillstandzeiten erhöhen.

Das Bandmaterial wird unter Spannung auf einen Wickelkern aufgewickelt. Dies ist für das erfindungsgemäße Verfahren von besonderer Relevanz. Die einzelnen Lagen des Bandmaterials werden dadurch unter größtmöglicher Vermeidung von Lufteinschlüssen aufeinander abgelegt. Lufteinschlüsse bilden beim Verpressen des Blattfederhalbzeuges Fehlstellen in der Blattfeder, die die mechanischen Eigenschaften der Feder negativ beeinflussen. Es kommt in der Folge zur Delamination, die wiederum in einem Versagen der gesamten Blattfeder mündet. Indem das Bandmaterial beim Aufwickeln unter Spannung gehalten wird, liegen die einzelnen Lagen des Bandmaterials vollflächig aneinander an und Lufteinschlüsse treten nicht auf. Zudem werden die einzelnen Lagen faltenfrei und präzise übereinander abgelegt.

Dies wird unterstützt, indem ein Andruckmittel eingesetzt wird, das die Lagen des Bandmaterials zum einen nochmals aneinander drückt und zudem das Fasermaterial in Kavitäten drückt, die auf dem Wickelkern zur Formgebung des Blattfederhalbzeuges ausgebildet sind. Das Andruckmittel ermöglicht so eine vollflächige und faltenfreie adhäsive Verbindungen benachbarter Lagen untereinander, da die vorimprägnierten Bandmaterialien leicht klebrig sind und so aneinander haften können. Je inniger diese Haftung ausgeprägt ist, desto besser vernetzen die einzelnen Lagen beim späteren Aushärten miteinander. Das Resultat ist eine haltbarere und unter Belastung stabilere Blattfeder mit hoher Lebensdauer.

Unter "benachbarten Lagen" werden im Rahmen der Erfindung in diesem Zusammenhang Lagen des Bandmaterials verstanden, die beim Wickeln übereinander abgelegt werden.

Gleichzeitig wird durch das Andrücken endgültig sichergestellt, dass jegliche Lufteinschlüsse zwischen den einzelnen Lagen des Bandmaterials entfernt werden, indem vorhandene Luftblasen aus dem Blattfederhalbzeug herausgedrückt werden. Die Vermeidung von Lufteinschlüssen und damit die Herstellung einer fehlstellenfreien Blattfeder wird insbesondere durch das Zusammenspiel des faltenfreien Wickelns unter Spannung und das Entlüften durch das Andruckmittel ermöglicht.

Der Wickelkern weist in Wickelrichtung umfangsseitig zumindest zwei Kavitäten zur Formgebung des Blattfederhalbzeuges auf. In einer fertigen Blattfeder ist der Großteil der Fasern in Längsrichtung der Feder ausgerichtet. Dementsprechend wird bei dem Wickelvorgang das Bandmaterial in einer Vorzugsrichtung parallel über- und/oder nebeneinander abgelegt, die der Längsrichtung der Feder entspricht. Diese Vorzugsrichtung bei der Ablage des Bandmaterials wird als Wickelrichtung bezeichnet. Die zumindest zwei Kavitäten werden in Umfangsrichtung hintereinander liegend ausgebildet. Dadurch ist es möglich, in einem Wickelvorgang mehrere Blattfederhalbzeuge simultan herzustellen und den Verschnitt an Fasermaterial möglichst gering zu halten. Gleichzeitig wird den Blattfederhalbzeugen ihre vorgesehene Form vorgegeben, wodurch die Handhabung beim Einlegen in das Presswerkzeug erleichtert wird und die Ausbildung der fertigen Blattfeder vereinfacht wird.

Nach dem Beenden des Wickelvorgangs wird das Bandmaterial abgeschnitten und die fertigen Blattfederhalbzeuge abgetrennt und aus ihren Kavitäten entnommen. Das Trennen geschieht durch Schneiden oder Stanzen.

In einem letzten Verfahrensschritt wird ein Presswerkzeug mit einem Trennmittel versehen und die Blattfederhalbzeuge in das Presswerkzeug eingelegt und das Werkzeug geschlossen. Die Halbzeuge werden dann mit einem Flächendruck von bevorzugt 1 bis 10 bar und einer Temperatur von bevorzugt 120°C bis 160°C beaufschlagt. Dabei vernetzt das Matrixharz und härtet aus, wodurch die Blattfeder entsteht. Die genauen Produktionsparameter hinsichtlich Druck und Temperatur hängen von dem verwendeten Matrixharz und der Geometrie der Blattfeder ab.

Bevorzugt werden mehrere Blattfederhalbzeuge gleichzeitig in einem Presswerkzeug verarbeitet. Dies verbessert nochmals die Taktzeit der Produktion.

Bevorzugt besteht das Werkzeug aus Ober- und Unterwerkzeug, die beide eine geregelte Temperaturführung aufweisen. Es kann auch vorgesehen sein, dass die Temperatur bereichsweise unterschiedlich geregelt wird.

In einer bevorzugten Ausgestaltung der Erfindung ist vorgesehen, dass der Wickelkern zum Aufwickeln des Bandmaterials um eine Rotationsachse senkrecht zur Wickelrichtung rotiert. Dies vereinfacht den Herstellungsprozess insbesondere, da somit kein zusätzlicher Manipulator zum Ablegen des Bandmaterials auf dem Wickelkern notwendig ist. Dazu wird der Anfang des Bandes oder der Bänder des Fasermaterials an dem Wickelkern befestigt, beispielsweise geklemmt, geklebt oder auch einfach geknotet.

Weiterhin bevorzugt wird das Bandmaterial auf einer Spule bereitgestellt und durch den Aufwickelvorgang von der Spule abgezogen. Auch diese Ausgestaltung dient der Verbesserung des Produktionsablaufs. Durch das Rotieren des Wickelkerns wird das Bandmaterial automatisch von den Spulen, die auf einem entsprechenden Gatter befestigt werden, zu dem Wickelkern transportiert. Um ein Verdrillen oder Verheddern des Bandmaterials zu vermeiden, können Führungselemente, beispielsweise Teflonrollen mit Nuten, vorgesehen sein.

Wie bereits erläutert wird das Bandmaterial unter Spannung auf den Wickelkern aufgewickelt. In einer weiteren besonderen Ausgestaltung der Erfindung ist daher die Rotation der Spulen beim Abziehen des Bandmaterials geregelt. Dadurch wird gewährleistet, dass das Bandmaterial während des Aufwickelns immer unter Spannung bleibt und nicht durchhängt. Besonders bevorzugt erfolgt die Regelung der Rotation der Spulen elektronisch.

In einer weiteren bevorzugten Ausführungsform werden mehrere Bänder des Bandmaterials bereitgestellt, wobei jedes Band eine Breite aufweist, die kleiner ist als die Breite des Blattfederhalbzeuges. Der Lagenaufbau des Blattfederhalbzeuges und damit der fertigen Blattfeder richtet sich nach den technischen Anforderungen, die an das Produkt gestellt werden. Die Verwendung eines Bandmaterials, das die gesamte vorgesehene Breite des Blattfederhalbzeuges aufweist, ermöglicht zwar einen relativ zügigen Aufbau des Halbzeugs beim Aufwickeln, gleichzeitig ist man hinsichtlich des Lagenaufbaus aber unflexibler und die Materialführung beim Aufwickeln ist komplizierter. Daher ist bevorzugt vorgesehen, das Halbzeug aus schmaleren Bandmaterialien herzustellen. Die Führung der schmaleren Bänder ist einfacher und es ist möglich, unterschiedliche Bandmaterialien lokal in das Blattfederhalbzeug einzubringen. Dabei können sowohl die Fasermaterialien variiert werden als auch der Aufbau der Bandmaterialien selbst hinsichtlich Faservolumengehalt oder auch Faserausrichtung.

Der für die vorgesehene Blattfeder ideale Lagenaufbau wird zuvor berechnet. Beispielsweise können mehrere Bandmaterialien nebeneinander eine Lage des Blattfederhalbzeuges bilden. Es können auch mehrere Bandmaterialien übereinander und/oder nebeneinander und/oder überlappend eine Lage des Blattfederhalbzeuges bilden. Im Rahmen der Erfindung meint der Begriff "Lage" insbesondere eine abgeschlossene Schicht einer aus mehreren Schichten aufgebauten Blattfeder.

Eine weitere besondere Ausgestaltung der Erfindung sieht vor, dass der Wickelkern beim Aufwickeln um eine vorgesehene Strecke in Richtung der Rotationsachse bewegt wird. Damit ist gemeint eine Bewegung in die Richtung, in die die Rotationsachse zeigt. Der Wickelkern wird somit auf der Rotationsachse verschoben bzw. hin und her bewegt. Dies ermöglicht eine weitere Variationsmöglichkeit bei der Gestaltung des Lagenaufbaus. Dadurch ist es möglich, einzelne Lagen von Bandmaterial versetzt zueinander auf dem Wickelkern abzulegen.

In einer vorteilhaften Weiterbildung dieses Gedankens wird Bandmaterial mit einer Breite kleiner als der vorgesehenen Breite des Blattfederhalbzeuges auf dem Wickelkern abgelegt. Der Wickelkern wird zwischen zwei Umdrehungen um eine Strecke bewegt wird, die kleiner ist als die Breite des Bandmaterials, bevorzugt entspricht die Strecke der Hälfte der Breite des Bandmaterials. Wird dabei ein einzelnes Bandmaterial verwendet, werden Bandabschnitte überlappend übereinander abgelegt und so eine Lage des Blattfederhalbzeugs erzeugt, wobei sicher gestellt ist, dass zwischen den einzelnen schmalen Bändern keine Lücken entstehen.

Auch wenn mehrere Bandmaterialien parallel zueinander auf dem Wickelkern aufgewickelt werden, um zusammen eine Lage des Blattfederhalbzeuges zu bilden, können diese einzelnen Lagen versetzt zueinander aufgewickelt werden, um Lücken in dem Blattfederhalbzeug zu vermeiden.

Bevorzugt wird der Wickelkern nach einer festgelegten Anzahl von Umdrehungen in die jeweils entgegengesetzte Richtung bewegt, so dass das Bandmaterial alternierend überlappend aufgewickelt wird. Während der Bewegung in die erste Richtung findet die Überlappung in dieser ersten Richtung statt, bei der Bewegung in die zweite Richtung findet die Überlappung in die andere Richtung statt.

Insbesondere kann so ein Lagenaufbau erzeugt werden, in dem mehrere Bandmaterialien eine Lage bilden und die einzelnen Lagen um genau eine halbe Breite eines Bandmaterials zueinander versetzt sind. Es werden dabei die Bandmaterialien parallel zueinander auf dem Wickelkern abgelegt, um eine erste Faserlage zu bilden. Die Gesamtbreite der parallel abgelegten Bandmaterialien ist um eine halbe Breite eines Bandmaterials kleiner als die vorgesehene Breite des Blattfederhalbzeugs. Die erste Faserlage liegt bündig an einer Längsseite der Kavitäten des Wickelkerns an. Nach einer ersten Umdrehung wird der Wickelkern um eine Strecke in Richtung der Rotationsachse bewegt, die der Hälfte der Breite eines Bandmaterials entspricht. Dann wird eine zweite Faserlage auf dem Wickelkern abgelegt, wobei die zweite Faserlage bündig mit der anderen Längsseite der Kavitäten des Wickelkerns abgelegt wird. Nach einer weiteren Umdrehung wird der Wickelkern um eine Strecke in die entgegengesetzte Richtung der Rotationsachse bewegt, die der Hälfte der Breite eines Bandmaterials entspricht. Dieser Prozess wird weiter so fortgesetzt, so dass ein Lagenaufbau entsteht, bei dem die einzelnen Lagen immer um eine halbe Bandbreite des Bandmaterials versetzt übereinander liegen. Dadurch werden Lücken in dem Blattfederhalbzeug und damit potentielle Fehlstellen in der fertigen Blattfeder vermieden.

Selbstverständlich kann neben dieser besonderen Ausführung des Verfahrens jeder beliebige Lagenaufbau erzeugt werden. Insbesondere wird durch ein passendes Bewegen des Wickelkerns während des Aufwickelvorgangs die Erzeugung von Dickenvariationen in der Blattfeder ermöglicht.

Eine weitere vorteilhafte Ausgestaltung der Erfindung sieht vor, dass vor, während oder nach dem Aufwickeln zusätzliche Zwischenlagen aus Faserwerkstoff in das Blattfederhalbzeug eingebracht werden. Dadurch wird eine Variation des Blattfederquerschnitts sowohl in Längs- als auch in Querrichtung der Blattfeder ermöglicht. Beispielsweise kann die Blattfeder lokal aufgedickt werden. Bei diesen zusätzlichen Zwischenlagen kann es sich um beliebige Arten von Faserwerkstoffen handeln. Es können Textilien (also Gewebe oder Gewirke), einzelne oder mehrere Faserbündel, zusätzliche Bandmaterialien und dergleichen eingebracht werden. Es können auch Fasermaterialien aus anderen als den in der Hauptsache für die Blattfeder verwendeten Werkstoffen eingebracht werden, um lokal besondere Eigenschaften der Blattfeder zu erzeugen. Die Zwischenlagen können dabei eine vollständige Lage des Blattfederhalbzeuges bilden oder nur als bereichsweise Lage vorgesehen sein.

In einer weiteren bevorzugten Ausgestaltung der Erfindung ist vorgesehen, dass vor, während oder nach dem Aufwickeln zumindest ein Element aus Nichtfasermaterial, beispielsweise aus Metall oder einem Elastomer, in das Blattfederhalbzeug eingebracht wird. Diese Elemente können ebenfalls der Verstärkung der Blattfeder dienen oder allgemein lokal die mechanischen Eigenschaften der Feder beeinflussen. Es ist auch möglich, Anbindungselemente wie beispielsweise Lageraugen in die Blattfeder zu integrieren.

Besonders bevorzugt wird die Kraft, mit der das Andruckmittel das Bandmaterial andrückt, eingestellt. Insbesondere kann die Kraft, mit der das Andruckmittel das Bandmaterial andrückt, elektronisch geregelt werden.

Weiterhin bevorzugt wird das Bandmaterial mit einer Andruckrolle als Andruckmittel angedrückt. Die Verwendung einer Andruckrolle bringt insbesondere den Vorteil mit sich, dass der Faserwerkstoff besonders schonend in die Kavitäten gedrückt wird und dabei eventuell entstandene Falten egalisiert werden. Auch das Entfernen von Lufteinschlüssen wird durch eine Andruckrolle technisch sehr einfach bewerkstelligt. Die Rolle wird bevorzugt nicht unmittelbar nach dem Ablegen des Bandmaterials auf dem Wickelkern eingesetzt, um dem Fasermaterial Zeit zu geben, sich zu setzen. Rotiert der Wickelkern, so kann die Andruckrolle im Wesentlichen ortsfest verbleiben.

In einem vorteilhaften zusätzlichen Verfahrensschritt wird die Blattfeder nach dem Verpressen einer weiteren Wärmebehandlung unterzogen. Das führt zu einer vorteilhaften Auswirkung auf die Taktzeiten, indem die Blattfedern in nicht vollständig ausgehärtetem Zustand aus dem Presswerkzeug entnommen werden und zum endgültigen Aushärten in einen Temperofen verbracht werden. Das Presswerkzeug ist dann schneller frei für das nächste Blattfederhalbzeug.

Insbesondere kann die Blattfeder in einem zusätzlichen Verfahrensschritt noch mechanisch bearbeitet werden, beispielsweise einem Beschnitt, einem Stanzen oder einem Schleifvorgang unterworfen werden.

Des Weiteren betrifft die Erfindung eine Anordnung zum Herstellen einer Blattfeder aus einem Faserverbundwerkstoff mit einer Vorrichtung zum Bereitstellen von mit Matrixharz vorimprägniertem Bandmaterial aus Faserwerkstoff sowie mit einem Wickelkern, der umfangsseitig in Wickelrichtung zumindest zwei Kavitäten zur Formgebung eines Blattfederhalbzeuges aufweist, sowie mit einem Andruckmittel, durch das benachbarte Lagen des Bandmaterials auf dem Wickelkern adhäsiv verbindbar sind und Lufteinschlüsse zwischen benachbarten Lagen des Bandmaterials entfernbar sind, und einem Werkzeug zum Verpressen des Blattfederhalbzeuges unter Aushärtung des Matrixharzes zur Herstellung einer Blattfeder.

Durch die Ausgestaltung der erfindungsgemäßen Vorrichtung mit einem Andruckmittel wird die Produktion von Blattfedern in mehrerer Hinsicht verbessert. Wie vorstehend bereits beschrieben ist es für die Erfindung von besonderer Relevanz, dass bei der Herstellung von Blattfedern aus Faserverbundwerkstoff Lufteinschlüsse und Falten vermieden werden. Durch das Andruckmittel werden benachbarte Lagen des Bandmaterials gegeneinander gepresst und das gesamte Blattfederhalbzeug in die formgebenden Kavitäten des Wickelkerns gedrückt. Dadurch wird eine innige adhäsive Verbindung zwischen den Lagen erzeugt, wodurch die Vernetzung des Matrixharzes beim späteren Aushärtevorgang erleichtert und verbessert wird. Gleichzeitig werden vorhandene Lufteinschlüsse aus dem Blattfederhalbzeug gepresst.

Ein weiterer Aspekt der Erfindung beinhaltet, dass das Bandmaterial unter Spannung auf den Wickelkern aufwickelbar sein soll. Auch dies dient der Vermeidung von Lufteinschlüssen und Faltenbildung. Bevorzugt handelt es sich bei der Vorrichtung zur Bereitstellung des Bandmaterials um eine geregelte Spule. Unter einer geregelten Spule wird verstanden, dass beim Abwickelvorgang die Rotation der Spule so gesteuert wird, dass immer gewährleistet ist, dass das Bandmaterial unter Spannung auf den Wickelkern aufwickelbar ist.

Insbesondere ist eine elektronische Regelung der Spule vorgesehen. Dadurch wird ein fließender Produktionsprozess ermöglicht.

Die erfindungsgemäße Vorrichtung ist nicht auf den Einsatz einer einzelnen Spule beschränkt. Im Rahmen der Erfindung kann auch eine Vielzahl von Spulen mit unterschiedlichen Bandmaterialien zum Einsatz kommen. Diese Spulen können beispielsweise auf einem Gestell oder einem Gatter angebracht werden.

In einer bevorzugten Ausgestaltung der Erfindung ist das Andruckmittel als Andruckrolle ausgebildet. Diese Andruckrolle ist vorzugsweise so angebracht, dass das aufgewickelte Bandmaterial, nachdem es auf den Wickelkern aufgelegt wurde, durch die Andruckrolle angedrückt wird. Die Andruckrolle rollt dabei in Wickelrichtung. Dadurch werden Lufteinschlüsse zwischen Lagen des Blattfederhalbzeuges unmittelbar nach dem Ablegen des Bandmaterials aus dem Halbzeug gedrückt.

Bevorzugt ist auch vorgesehen, dass die Andruckkraft des Andruckmittels einstellbar ist. Dadurch kann das Andrücken zugeschnitten auf das jeweilige Bauteil vorgenommen werden. Man vermeidet, dass das Matrixharz durch zu hohe Andruckkraft aus den Kavitäten gepresst wird und den Wickelkern und andere Komponenten der Vorrichtung verunreinigt oder durch zu geringe Andruckkraft die Lagen aus Fasermaterial nicht vollflächig aneinander gedrückt werden. Die Andruckkraft wird im Allgemeinen in Höhe von einigen Bar gewählt. Die Einstellung der Andruckkraft kann durch pneumatische oder elektromotorische oder ähnlich gestaltete Elemente erfolgen.

Eine weitere Ausgestaltung der Erfindung sieht vor, dass der Wickelkern zum Aufwickeln des Bandmaterials um eine Achse senkrecht zur Wickelrichtung rotierbar ist. Diese Ausgestaltung dient insbesondere dazu, um kurze Taktzeiten zu erhalten. Durch die Rotation des Wickelkerns wird das Bandmaterial sozusagen automatisch von den Bereitstellungsvorrichtungen abgezogen. Es ist kein Manipulator notwendig, der das Bandmaterial um den Wickelkern herumführt, wohingegen eine einfache Rotationsbewegung des Wickelkerns einfacher zu erzeugen ist.

Durch eine geeignete der Rotation überlagerte Bewegung des Wickelkerns im Raum kann das Bandmaterial beim Aufwickeln unter Spannung gehalten werden, was für die lufteinschlussfreie Herstellung des Blattfederhalbzeuges vorteilhaft ist.

Insbesondere im Zusammenspiel mit der Bereitstellung des Bandmaterials auf Spulen, insbesondere geregelten Spulen, kann das Bandmaterial vorteilhaft unter Spannung aufgewickelt werden.

Weiterhin ist die Erfindung dergestalt ausgestaltet, dass der Wickelkern in Richtung der Rotationsachse bewegbar ist. Dadurch ist es möglich, dass das Bandmaterial überlappend aufgewickelt wird. Dadurch kann gewährleistet werden, dass keine Lücken und potentielle Fehlstellen in dem Blattfederhalbzeug entstehen.

Exemplarische Ausführungsformen der Erfindung werden in der nachfolgenden Figurenbeschreibung erläutert. Dabei zeigen:
- Figur 1:: eine Vorrichtung zum Herstellen eines Blattfederhalbzeuges;
- Figur 2:: einen Faserlagenaufbau mit zusätzlichen Faserlagen;
- Figuren 3a - e:: ein erfindungsgemäßes Verfahren zum Herstellen einer Blattfeder und
- Figur 4:: eine schematische Ansicht einer Anordnung zum Herstellen einer Blattfeder.

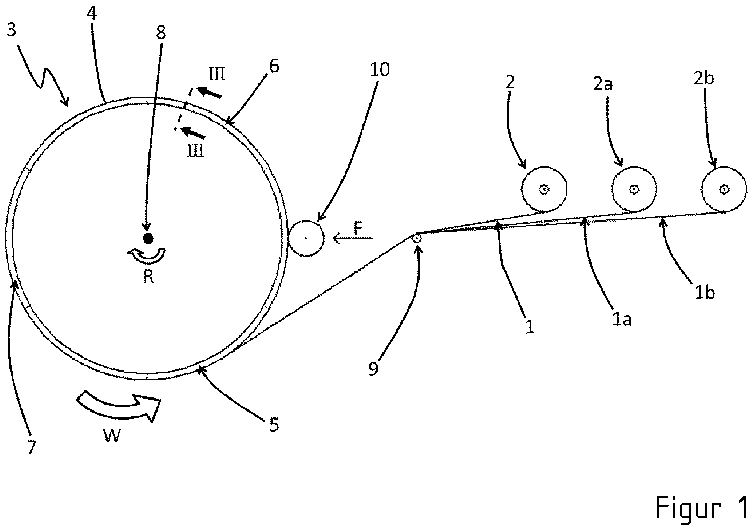

Der Teil des erfindungsgemäßen Verfahrens, der das Aufwickeln von Bandmaterial 1, 1a, 1b auf einen Wickelkern 3 zum Gegenstand hat, ist in Fig. 1 dargestellt. Das Bandmaterial 1, 1a, 1b wird auf Spulen 2, 2a, 2b bereitgestellt. Bei dem Bandmaterial 1, 1a, 1b handelt es sich vorliegend um sogenannte Towpregs, mit Kunstharz vorimprägnierte Bündel aus Glasfasermaterial. Das Material, aus dem die Fasern bestehen, sowie das Matrixharz werden im Allgemeinen abhängig von den technischen Anforderungen an die Blattfeder gewählt.

Die Anzahl der Towpregs, die simultan auf den Wickelkern 3 aufgebracht werden, wird in Abhängigkeit von der vorgesehenen Breite der fertigen Blattfeder und dem gewünschten Fasergehalt gewählt. Es kann sich daher um ein einziges Bandmaterial 1, 1a, 1b handeln, es kann aber auch eine Mehrzahl von Bandmaterialien 1, 1a, 1b verwendet werden, also zumindest zwei Bandmaterialien 1, 1a, 1b. Es ist auch möglich, mehrere Bandmaterialien 1, 1a, 1b neben und übereinander gleichzeitig aufzuwickeln. In diesem Fall sind zumeist zehn oder mehr Bandmaterialien 1, 1a, 1b vorgesehen. Der Einfachheit der Darstellung halber sind in Fig. 1 lediglich drei Bandmaterialien 1, 1a, 1b dargestellt.

Die Bandmaterialien 1, 1a, 1b haben eine Breite von jeweils zwei bis zehn Millimetern. Der Harzgehalt beträgt 0,5 bis 1,5 Gramm/Meter. In einer anderen Variante wird ein einzelnes Bandmaterial verwendet, dessen Breite der Breite der fertigen Blattfeder entspricht.

Das Bandmaterial 1, 1a, 1b wird über Führungselemente 9 zu dem Wickelkern 3 geführt und an diesem eingespannt. Bei den Führungselementen 9 kann es sich beispielsweise um Kunststoffrollen, aber auch um Rohre, Schienenelemente und ähnliches handeln. Gegebenenfalls muss noch eine Trennfolie von dem verwendeten Bandmaterial 1, 1a, 1b entfernt werden, beispielsweise indem eine nicht näher dargestellte Aufspuleinheit die Trennfolie gegenläufig zur Führungsrichtung des Bandmaterials 1, 1a, 1b abzieht. Für die Befestigung der Bandmaterialien 1, 1a, 1b an dem Wickelkern 3 kommen mechanische Befestigungsarten wie Klemmen oder Knoten ebenso in Frage wie stoffschlüssige Verbindungen, etwa die Verwendung von Klebstoff. Insbesondere kann das in dem Bandmaterial 1, 1a, 1b vorhandene Matrixharz für eine Klebeverbindung genutzt werden, indem es kurz aufgewärmt wird, wodurch das Harz zähflüssig und klebrig wird.

In der Oberfläche 4 des Wickelkerns 3 sind drei Kavitäten 5, 6, 7 vorgesehen, die der Formgebung des Blattfederhalbzeuges dienen. Sie sind umfangsseitig in einer Wickelrichtung W ausgebildet. Die Geometrie der Kavitäten 5, 6, 7 entspricht der vorgesehenen äußeren Ausgestaltung der Blattfederhalbzeuge. Dabei ist zu beachten, dass bei der Herstellung der fertigen Blattfeder das Blattfederhalbzeug in einem nicht dargestellten Werkzeug verpresst wird und unter Umständen eine Größenänderung erfährt. Entsprechend muss diese Größenänderung bei der Konzeption des Halbzeugs vorgehalten werden.

Das Bandmaterial 1, 1a, 1b wird unter Spannung und faltenfrei auf den Wickelkern 3 in einer Wickelrichtung W aufgewickelt. Dies wird durch eine bevorzugt elektronische Regelung der Spulen 2, 2a, 2b gewährleistet. Die Regelung ist derart, dass das Bandmaterial 1, 1a, 1b zu jedem Zeitpunkt unter Spannung steht und an keiner Stelle des Zuführweges durchhängt. Dies wird unterstützt durch die Führungselemente 9. Der Wickelkern 3 rotiert dabei bevorzugt in einer Rotationsrichtung R um eine Rotationsachse 8. Diese Rotationsbewegung wird ebenfalls gesteuert, um das Aufwickeln unter Spannung gewährleisten zu können. Dabei kann ein Roboter oder Manipulator eingesetzt, um den Wickelkern 3 zu rotieren und zu bewegen, es ist aber auch möglich, den Wickelkern um eine feststehende Achse zu rotieren.

Der Wickelkern 3 ist hier mit drei Kavitäten 5, 6, 7 ausgestattet. Es können aber auch nur zwei oder auch vier und mehr Kavitäten vorgesehen sein. Dementsprechend aufwändiger kann sich die Ausgestaltung des Wickelkerns 3 und dessen Bewegungsschema während des Wickelvorgangs ergeben.

Dadurch, dass das Bandmaterial 1, 1a, 1b unter Spannung auf den Wickelkern 3 aufgewickelt wird, soll vermieden werden, dass sich zwischen einzelnen Faserlagen des Blattfederhalbzeuges Lufteinschlüsse bilden. Dies wird unterstützt durch das Andrücken der Bandmaterialien 1, 1a, 1b durch ein Andruckmittel 10. Das Andruckmittel 10 ist im vorliegenden Beispiel als Andruckrolle ausgestaltet. Das Andruckmittel 10 drückt das Bandmaterial 1, 1a, 1b mit einer Andruckkraft F in die Kavitäten 5, 6, 7. Dadurch werden Lufteinschlüsse zwischen den Faserlagen herausgepresst und gleichzeitig die Faserlagen adhäsiv miteinander verbunden. Das Matrixharz des Bandmaterials 1, 1a, 1b ist leicht klebrig, so dass durch den Druck des Andruckmittels 10 die einzelnen übereinander liegenden Faserlagen sehr gut aneinander haften. Die einzelnen Faserlagen liegen durch diese Maßnahmen vollflächig aneinander Dadurch wird auch der spätere Aushärtungsprozess, bei dem die Moleküle des Matrixharzes miteinander vernetzen, erleichtert und die Qualität der fertigen Blattfeder verbessert.

Nach Beenden des Wickelprozesses werden die Bandmaterialien 1, 1a, 1b abgeschnitten und die fertigen Blattfederhalbzeuge aus den Kavitäten 5, 6, 7 entnommen. Die Blattfederhalbzeuge werden in ein nicht näher dargestelltes beheiztes Werkzeug mit einer bevorzugt isothermen Temperaturführung, das bevorzugt aus einem Ober- und einem Unterwerkzeug besteht, eingelegt. Zwischen Ober- und Unterwerkzeug besteht ein Formhohlraum, dessen Innenoberfläche der Geometrie der fertigen Blattfeder entspricht. Die Innenoberfläche des Werkzeugs wird mit einem Trennmittel versehen, um später die Entnahme der fertigen Blattfeder zu erleichtern. Nach dem Schließen des Werkzeugs wird das Blattfederhalbzeug für 5 bis 60 Minuten mit einem Flächendruck von 1 bis 10 bar und einer Temperatur von 120°C bis 160°C beaufschlagt, so dass das Matrixharz vernetzt und aushärtet.

Nach der Entnahme der fertigen Blattfeder kann diese in einem Temperofen einem weiteren Wärmebehandlungsprozess ausgesetzt werden. Ebenso können weitere mechanische Bearbeitungsschritte vorgesehen sein, wie ein Beschnitt oder das Anbringen von Bohrungen.

Der Aufbau der Blattfeder aus einzelnen Lagen von Fasermaterial hängt von den technischen Anforderungen an die Blattfeder ab. Dementsprechend wird das Bandmaterial 1, 1a, 1b hinsichtlich Fasermaterial (Glas, Kohle, Aramid und dergleichen), Matrixharz (beispielsweise Duroplast, Thermoplast) und Verarbeitung (Rovings, Towpreg, Tape, gewebtes oder gelegtes Textil und dergleichen) ausgewählt und ein geeigneter Lagenaufbau berechnet. Dabei steht eine Vielzahl von Variationsmöglichkeiten zur Auswahl.

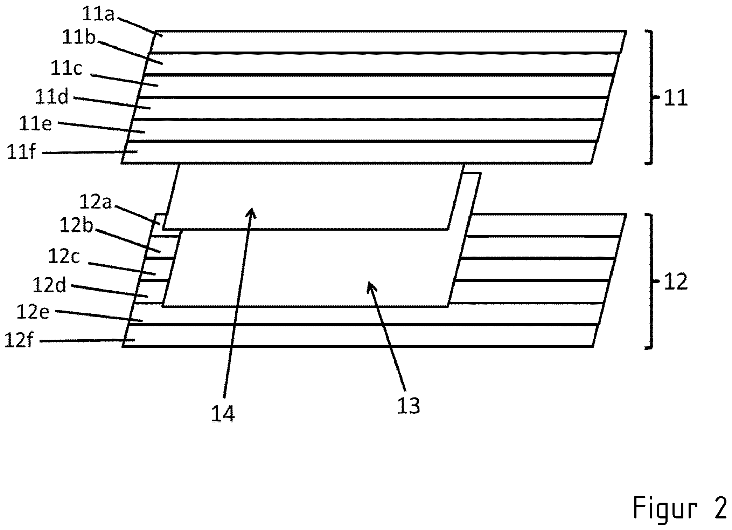

In Fig. 2 ist ein Lagenaufbau in einer Explosionsdarstellung gezeigt, in der zwischen einzelnen Faserlagen 11, 12 zusätzliche Zwischenlagen 13, 14 aus Faserwerkstoff eingebracht sind. Diese führen zu einer lokalen Aufdickung der fertigen Blattfeder. Dies ist beispielsweise bei Blattfedern notwendig, die in einem Fahrwerk in Fahrzeuglängsrichtung eingebaut werden (Längsblattfedern). Die Abschnitte, an denen diese Blattfedern am Fahrwerk angebunden werden, besitzen einen größeren Querschnitt als der Rest der Feder. In Fig. 2 bestehen die Faserlagen 11, 12 aus einzelnen Bandmaterialien 11a-f, 12a-f, die bündig nebeneinander abgelegt werden. Aus übereinander geschichteten Faserlagen 11, 12 wird das Blattfederhalbzeug aufgebaut, in dem die Bandmaterialien 11a-f, 12a-f auf den Wickelkern 3 gewickelt werden. Zu vorgesehenen Zeitpunkten, hier nach dem Aufbringen der Faserlage 12, wird der Wickelvorgang gestoppt und die Zwischenlagen 13, 14 manuell oder automatisiert in das Blattfederhalbzeug eingebracht. Die Zwischenlagen 13, 14, die auch Patches genannt werden, sind in diesem Fall gewebte Textillagen, die ebenso breit sind wie die Faserlagen 11, 12. Danach wird der Wickelvorgang mit dem Aufbringen der Faserlage 11 fortgesetzt.

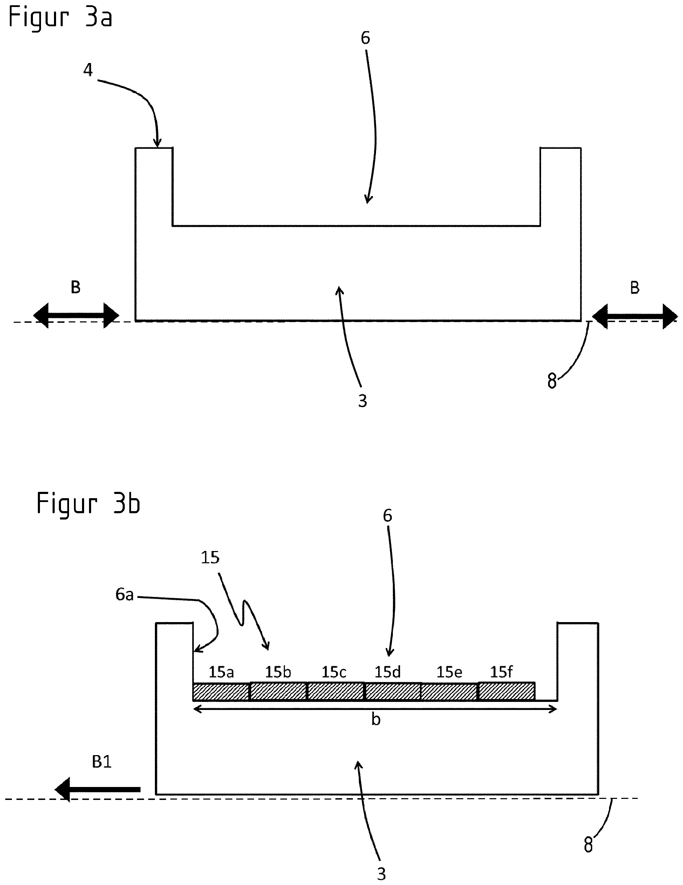

Wenn einzelne Bandmaterialien 11a-f, 12a-f nebeneinander aufgewickelt werden, um Faserlagen 11, 12 zu erhalten, wie in Fig. 2 dargestellt, besteht die Gefahr, dass zwischen den Bandmaterialien 11a-f, 12a-f toleranzbedingt Lücken entstehen. Geschieht das bei mehreren Faserlagen 11, 12 hintereinander, entstehen auch hier wieder Lufteinschlüsse, die zu Fehlstellen in der fertigen Blattfeder führen können. Dem kann durch geeignete Wickeltechniken begegnet werden, eine davon ist in der Fig. 3a bis 3d erläutert. In den Fig. 3a bis 3d ist der Schnitt III-III durch die Kavität 6 des Wickelkerns 3 gezeigt. Die Kavität ist in die Oberfläche 4 des Wickelkerns 3 eingebracht. Der Wickelkern 3 ist in einer Bewegungsrichtung B in Richtung auf der Rotationsachse 8 beweglich ausgebildet. Insbesondere erfolgt die Bewegung auf der Rotationsachse 8. Mithin ist der Wickelkern 3 relativ verschiebbar auf der Rotationsachse 8 angeordnet.

Bei der ersten Umdrehung des Wickelkerns 3 wird eine Faserlage 15 bestehend aus einzelnen Bandmaterialien 15a-f bündig zu einer Seitenwand 6a der Kavität 6 aufgewickelt (Fig. 3b). Die Breite der Bandmaterialien 15a-f ist dabei so gewählt, dass eine Faserlage um eine halbe Breite der Bandmaterialien 15a-f schmaler ist als die Breite b der Kavität 6. Nach der ersten Umdrehung wird der Wickelkern 3 durch eine Bewegung B1 auf der Rotationsachse 8 des Wickelkerns 3 um eine Strecke verfahren, die bevorzugt der halben Breite eines Bandmaterials 15a-f entspricht. Es versteht sich von selbst, dass die Darstellung der Fig. 3a bis 3e nicht maßstäblich zu betrachten sind und nur der Verdeutlichung des Verfahrensprinzips dienen.

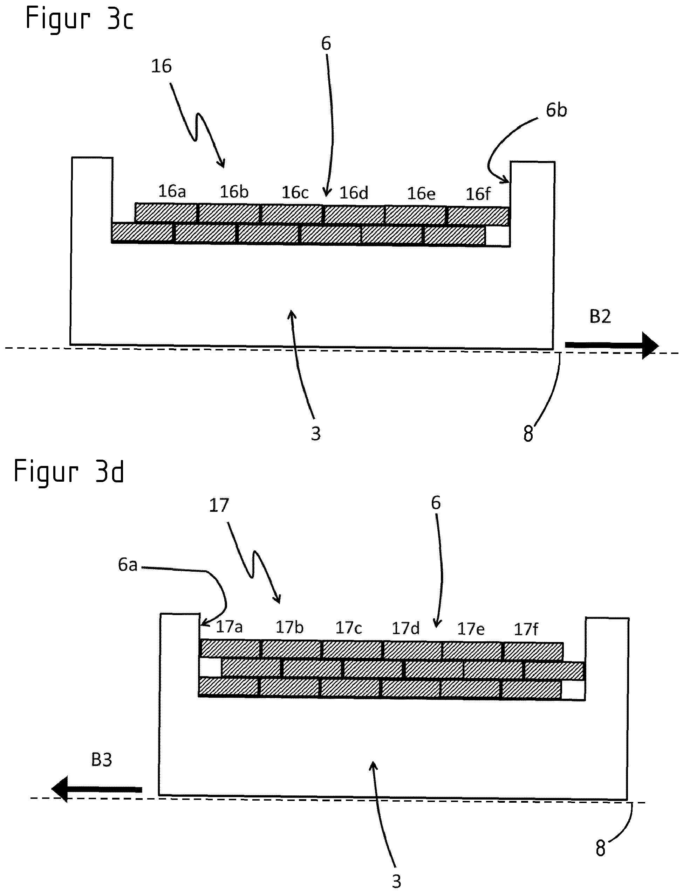

Während der zweiten Umdrehung des Wickelkerns 3 (Fig. 3c) wird eine Faserlage 16 bestehend aus einzelnen Bandmaterialien 16a-f bündig zu der anderen Seitenwand 6b der Kavität 6 aufgewickelt. Dabei bedecken die Bandmaterialien 16a-f die Stoßkanten der darunter liegenden Bandmaterialien 15a-f. Nach der zweiten Umdrehung wird der Wickelkern 3 durch eine Bewegung B2 auf der Rotationsachse 8 des Wickelkerns 3 in die entgegengesetzte Richtung verfahren und befindet sich dann wieder in der Ursprungsposition.

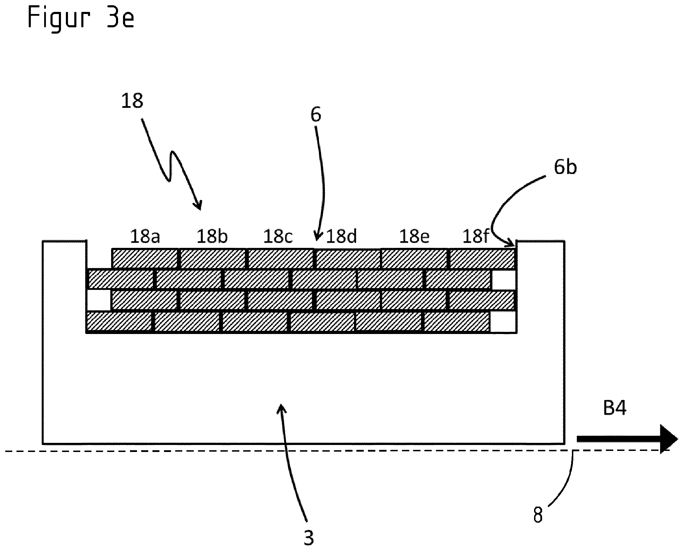

Während der dritten Umdrehung des Wickelkerns 3 (Fig. 3d) wird eine Faserlage 17 bestehend aus einzelnen Bandmaterialien 17a-f bündig zu der Seitenwand 6a der Kavität 6 aufgewickelt. Und danach der Wickelkern 3 wieder in einer Bewegung B3 analog zur Bewegung B1 verfahren. Darauf folgt eine vierte Umdrehung des Wickelkerns 3 (Fig. 3e), wobei eine Faserlage 18 bestehend aus einzelnen Bandmaterialien 18a-f bündig zu der anderen Seitenwand 6b der Kavität 6 aufgewickelt wird, woraufhin der Wickelkern 3 in einer Bewegung B4 analog zur Bewegung B2 verfahren wird. Dies wird so lange weitergeführt bis das Blattfederhalbzeug fertiggestellt ist.

Der Wickelkern 3 wird also nach jeder Umdrehung abwechselnd in die jeweils entgegengesetzte Richtung verfahren, so dass das Bandmaterial alternierend überlappend aufgewickelt wird und keine unerwünschten Lücken und Lufteinschlüsse im Blattfederhalbzeug entstehen.

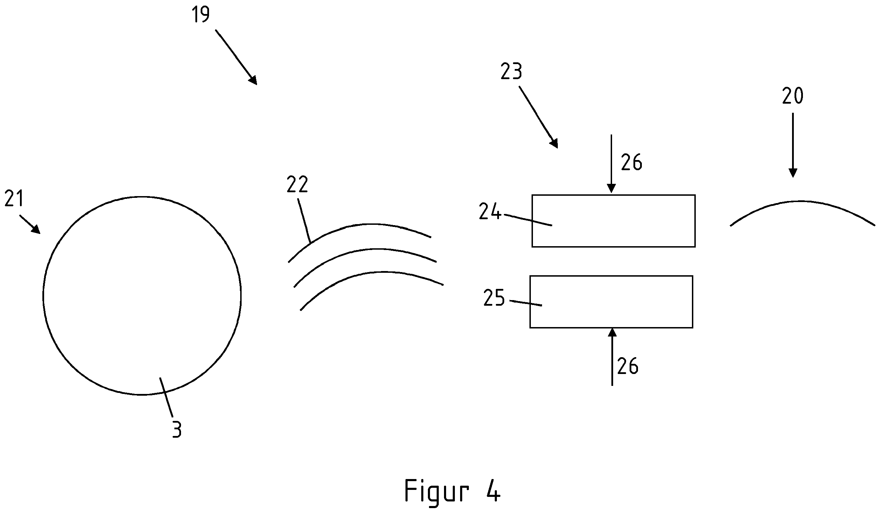

Figur 4 zeigt eine Anordnung 19 zum Herstellen einer Blattfeder 20. Die Anordnung 19 weist zunächst die zuvor beschriebene Vorrichtung 21 zum Herstellen eines Blattfederhalbzeuges 22 auf. Dabei wird der Wickelkern 3 in vorbeschriebener Weise bewickelt und dabei mindestens zwei Blattfederhalbzeuge 22, bevorzugt drei Blattfederhalbzeuge 22, hergestellt. Diese werden dann einem nachgelagerten Werkzeug 23 zum Verpressen eines darin eingelegten Blattfederhalbzeuges zugeführt. Beispielsweise ist das Werkzeug 23 zum Verpressen als Umformpresse, aufweisend ein Oberwerkzeug 24 und Unterwerkzeug 25, ausgebildet. Unter Aufbringen einer Pressenkraft 26 wird dieses geschlossen und nach Öffnen die hergestellte Blattfeder 20 entnommen.

### Bezugszeichen:

- 1 -: Bandmaterial
- 1a -: Bandmaterial
- 1b -: Bandmaterial
- 2 -: Spule
- 2a -: Spule
- 2b -: Spule
- 3 -: Wickelkern
- 4 -: Oberfläche von 3
- 5 -: Kavität
- 6 -: Kavität
- 6a -: Seitenwand von 6
- 6b -: Seitenwand von 6
- 7 -: Kavität
- 8 -: Rotationsachse
- 9 -: Führungselement
- 10 -: Andruckmittel
- 11 -: Faserlage
- 11a-f -: Bandmaterial
- 12 -: Faserlage
- 12a-f -: Bandmaterial
- 13 -: Zwischenlage
- 14 -: Zwischenlage
- 15 -: Faserlage
- 15a-f -: Bandmaterial
- 16 -: Faserlage
- 16a-f -: Bandmaterial
- 17 -: Faserlage
- 17a-f -: Bandmaterial
- 18 -: Faserlage
- 18a-f -: Bandmaterial
- 19 -: Anordnung
- 20 -: Blattfeder
- 21 -: Vorrichtung
- 22 -: Blattfederhalbzeug
- 23 -: Werkzeug
- 24 -: Oberwerkzeug
- 25 -: Unterwerkzeug
- 26 -: Pressen kraft

- B -: Bewegungsrichtung
- B1 -: Bewegung
- B2 -: Bewegung
- B3 -: Bewegung
- B4 -: Bewegung
- F -: Andruckkraft
- R -: Rotationsrichtung
- W -: Wickelrichtung
- b -: Breite von 6

## Patentansprüche

1. Verfahren zum Herstellen einer Blattfeder aus einem Faserverbundwerkstoff mit folgenden Verfahrensschritten:
• Bereitstellen von mit Matrixharz vorimprägniertem Bandmaterial (1, 1a, 1b) aus Faserwerkstoff,
• Herstellen eines Blattfederhalbzeuges durch Aufwickeln des Bandmaterials (1, 1a, 1b) unter Spannung auf einen Wickelkern (3), wobei auf dem Wickelkern (3) in Wickelrichtung W umfangsseitig zumindest zwei Kavitäten (5, 6, 7) zur Formgebung jeweils eines Blattfederhalbzeuges ausgebildet sind,
• Andrücken des Bandmaterials (1, 1a, 1b) durch ein Andruckmittel (10) zum adhäsiven Verbinden benachbarter Lagen des Bandmaterials (1, 1a, 1b) auf dem Wickelkern (3) und zum Entfernen von Lufteinschlüssen zwischen benachbarten Lagen des Bandmaterials (1, 1a, 1b),
• Entnahme der Blattfederhalbzeuge aus den Kavitäten (5, 6, 7) des Wickelkerns (3),
• Herstellen einer Blattfeder durch Verpressen eines Blattfederhalbzeuges unter Aushärtung des Matrixharzes.

2. Verfahren nach Anspruch 1, **dadurch gekennzeichnet, dass** der Wickelkern (3) zum Aufwickeln des Bandmaterials (1, 1a, 1b) um eine Rotationsachse (8) senkrecht zur Wickelrichtung (W) rotiert.

3. Verfahren nach einem der Ansprüche 1 oder 2, **dadurch gekennzeichnet, dass** das Bandmaterial (1, 1a, 1b) auf einer Spule (2, 2a, 2b) bereitgestellt wird und durch das Aufwickeln des Bandmaterials (1, 1a, 1b) auf den Wickelkern (3) von der Spule (2, 2a, 2b) abgezogen wird.

4. Verfahren nach Anspruch 3, **dadurch gekennzeichnet, dass** die Rotation der Spule (2, 2a, 2b) beim Abziehen des Bandmaterials (1, 1a, 1b) geregelt wird.

5. Verfahren nach einem oder mehreren der vorstehenden Ansprüche, **dadurch gekennzeichnet, dass** mehrere Bänder des Bandmaterials (1, 1a, 1b) bereitgestellt werden, wobei jedes Bandmaterial (1, 1a, 1b) eine Breite aufweist, die kleiner ist als die vorgesehene Breite des Blattfederhalbzeuges.

6. Verfahren nach einem der vorstehenden Ansprüche, **dadurch gekennzeichnet, dass** der Wickelkern (3) beim Aufwickeln um eine vorgesehene Strecke auf der Rotationsachse (8) bewegt wird.

7. Verfahren nach Anspruch 6, **dadurch gekennzeichnet, dass** der Wickelkern (3) zwischen zwei Umdrehungen um eine Strecke bewegt wird, die kleiner ist als die Breite des Bandmaterials (1, 1a, 1b), bevorzugt entspricht die Strecke der Hälfte der Breite des Bandmaterials (1, 1a, 1b).

8. Verfahren nach Anspruch 6 oder 7, **dadurch gekennzeichnet, dass** nach einer festgelegten Anzahl von Umdrehungen der Wickelkern (3) in die jeweils entgegengesetzte Richtung bewegt wird, so dass das Bandmaterial (1, 1a, 1b) alternierend überlappend aufgewickelt wird.

9. Verfahren nach einem oder mehreren der vorstehenden Ansprüche, **dadurch gekennzeichnet, dass** vor, während oder nach dem Aufwickeln zusätzliche Zwischenlagen (13, 14) aus Faserwerkstoff in das Blattfederhalbzeug eingebracht werden.

10. Verfahren nach einem oder mehreren der vorstehenden Ansprüche, **dadurch gekennzeichnet, dass** vor, während oder nach dem Aufwickeln zumindest ein Element aus Nichtfasermaterial, beispielsweise aus Metall oder einem Elastomer, in das Blattfederhalbzeug eingebracht wird.

11. Verfahren nach einem oder mehreren der vorstehenden Ansprüche, **dadurch gekennzeichnet, dass** eine Andruckkraft (F), mit der das Andruckmittel (10) das Bandmaterial (1, 1a, 1b) andrückt, eingestellt wird.

12. Verfahren nach einem oder mehreren der vorstehenden Ansprüche, **dadurch gekennzeichnet, dass** das Bandmaterial (1, 1a, 1b) mit einer Andruckrolle als Andruckmittel (10) angedrückt wird.

13. Verfahren nach einem oder mehreren der vorstehenden Ansprüche, **dadurch gekennzeichnet, dass** in einem zusätzlichen Verfahrensschritt die Blattfeder nach dem Verpressen einer weiteren Wärmebehandlung unterzogen wird.

14. Anordnung zum Herstellen einer Blattfeder aus einem Faserverbundwerkstoff mit einer Vorrichtung (21) zum Bereitstellen von mit Matrixharz vorimprägniertem Bandmaterial (1, 1a, 1b) aus Faserwerkstoff sowie mit einem Wickelkern (3), der umfangsseitig in Wickelrichtung zumindest zwei Kavitäten (5, 6, 7) zur Formgebung eines Blattfederhalbzeuges (22) aufweist, sowie mit einem Andruckmittel (10), durch das benachbarte Lagen des Bandmaterials (1, 1a, 1 b) auf dem Wickelkern (3) adhäsiv verbindbar sind und Lufteinschlüsse zwischen benachbarten Lagen des Bandmaterials (1, 1a, 1b) entfernbar sind und einem Werkzeug zum Verpressen des Blattfederhalbzeuges (22) unter Aushärtung des Matrixharzes zur Herstellung einer Blattfeder (20).

15. Anordnung nach Anspruch 14, **dadurch gekennzeichnet, dass** das Bandmaterial (1, 1a, 1b) auf einer geregelten Spule (2, 2a, 2b) bereitgestellt ist, wodurch das Bandmaterial (1, 1a, 1b) unter Spannung auf den Wickelkern (3) aufwickelbar ist.

16. Anordnung nach Anspruch 14 oder 15, **dadurch gekennzeichnet, dass** das Andruckmittel (10) als Andruckrolle ausgebildet ist.

17. Anordnung nach einem der Ansprüche 14 bis 16, **dadurch gekennzeichnet, dass** eine Andruckkraft (F) des Andruckmittels (10) einstellbar ist.

18. Anordnung nach einem der Ansprüche 14 bis 17, **dadurch gekennzeichnet, dass** der Wickelkern (3) zum Aufwickeln des Bandmaterials (1, 1a, 1b) um eine Rotationsachse (8) senkrecht zur Wickelrichtung (W) rotierbar ist.

19. Anordnung nach einem der Ansprüche 14 bis 18, **dadurch gekennzeichnet, dass** der Wickelkern (3) in Richtung der Rotationsachse (8) bewegbar ist.

## Claims

1. Method for producing a leaf spring from a fibre composite material, having the following method steps:
• providing matrix resin-preimpregnated strip material (1, 1a, 1b) of fibre material,
• producing a semifinished leaf spring by winding the strip material (1, 1a, 1b) under tension onto a winding core (3), at least two cavities (5, 6, 7), respectively for shaping a semifinished leaf spring, being formed circumferentially on the winding core (3) in the winding direction W,
• pressing the strip material (1, 1a, 1b) by a pressing means (10) for adhesive bonding of neighbouring layers of the strip material (1, 1a, 1b) on the winding core (3) and for removal of air inclusions between neighbouring layers of the strip material (1, 1a, 1b),
• removing the semifinished leaf springs from the cavities (5, 6, 7) of the winding core (3),
• producing a leaf spring by compressing a semifinished leaf spring while curing the matrix resin.

2. Method according to Claim 1, **characterised in that** the winding core (3) rotates about a rotation axis (8) perpendicular to the winding direction (W) for winding of the strip material (1, 1a, 1b).

3. Method according to Claim 1 or 2, **characterised in that** the strip material (1, 1a, 1b) is provided on a reel (2, 2a, 2b) and is removed from the reel (2, 2a, 2b) by the winding of the strip material (1, 1a, 1b) onto the winding core (3).

4. Method according to Claim 3, **characterised in that** the rotation of the reel (2, 2a, 2b) during the removal of the strip material (1, 1a, 1b) is regulated.

5. Method according to one or more of the preceding claims, **characterised in that** a plurality of strips of the strip material (1, 1a, 1b) are provided, each strip material (1, 1a, 1b) having a width which is less than the intended width of the semifinished leaf spring.

6. Method according to one of the preceding claims, **characterised in that** the winding core (3) is moved through an intended distance on the rotation axis (8) during the winding.

7. Method according to Claim 6, **characterised in that** the winding core (3) is moved between two revolutions through a distance which is less than the width of the strip material (1, 1a, 1b), the distance preferably corresponding to half the width of the strip material (1, 1a, 1b).

8. Method according to Claim 6 or 7, **characterised in that** the winding core (3) is moved in the respectively opposite direction after a set number of revolutions, so that the strip material (1, 1a, 1b) can be wound alternately overlapping.

9. Method according to one or more of the preceding claims, **characterised in that** additional intermediate layers (13, 14) of fibre material are introduced into the semifinished leaf spring before, during or after the winding.

10. Method according to one or more of the preceding claims, **characterised in that** at least one element made of nonfibrous material, for example made of metal or an elastomer, is introduced into the semifinished leaf spring before, during or after the winding.

11. Method according to one or more of the preceding claims, **characterised in that** a pressing force (F), with which the pressing means (10) presses on the strip material (1, 1a, 1b), is adjusted.

12. Method according to one or more of the preceding claims, **characterised in that** the strip material (1, 1a, 1b) is pressed with a pressing roll as the pressing means (10).

13. Method according to one or more of the preceding claims, **characterised in that**, the leaf spring is subjected to a further heat treatment in an additional method step after the compression.

14. Arrangement for producing a leaf spring, having a device (21) for providing matrix resin-preimpregnated strip material (1, 1a, 1b) of fibre material, and having a winding core (3) which has at least two cavities (5, 6, 7) for shaping a semifinished leaf spring (22) circumferentially in the winding direction, and having a pressing means (10) by which neighbouring layers of the strip material (1, 1a, 1b) can be adhesively bonded on the winding core (3) and air inclusions between neighbouring layers of the strip material (1, 1a, 1b) can be removed, and a tool for compressing the semifinished leaf spring (22) while curing the matrix resin in order to produce a leaf spring (20).

15. Arrangement according to Claim 14, **characterised in that** the strip material (1, 1a, 1b) is provided on a regulated reel (2, 2a, 2b), so that the strip material (1, 1a, 1b) can be wound under tension onto the winding core (3).

16. Arrangement according to Claim 14 or 15, **characterised in that** the pressing means (10) is a pressing roll.

17. Arrangement according to one of claims 14 to 16, **characterised in that** a pressing force (F) of the pressing means (10) can be adjusted.

18. Arrangement according to one of claims 14 to 17, **characterised in that** the winding core (3) can be rotated about a rotation axis (8) perpendicular to the winding direction (W) for winding of the strip material (1, 1a, 1b).

19. Arrangement according to one of claims 14 to 18, **characterised in that** the winding core (3) can be moved in the direction of the rotation axis (8).

## Revendications

1. Procédé de fabrication d'un ressort à lame à partir d'un matériau composite fibreux, avec les étapes de procédé suivantes :
• fourniture d'un matériau en bande (1, 1a, 1b) formé d'un matériau fibreux et pré-imprégné d'une résine matrice,
• fabrication d'un demi-produit de ressort à lame par enroulement du matériau en bande (1, 1a, 1b) sous tension sur un axe de bobinage (3), dans lequel sont formées sur l'axe de bobinage (3) dans la direction d'enroulement W côté périphérique au moins deux cavités (5, 6, 7) pour le façonnage respectif d'un demi-produit de ressort à lame,
• pression du matériau en bande (1, 1a, 1b) par un organe presseur (10) pour lier par adhésif des couches adjacentes du matériau en bande (1, 1a, 1b) sur l'axe de bobinage (3) et éliminer des poches d'air entre les couches adjacentes du matériau en bande (1, 1a, 1b),
• retrait du demi-produit de ressort à lame des cavités (5, 6, 7) de l'axe de bobinage (3),
• fabrication d'un ressort à lame par compression d'un demi-produit de ressort à lame en durcissant la résine matrice.

2. Procédé selon la revendication 1, **caractérisé en ce que** l'axe de bobinage (3) pour enrouler le matériau en bande (1, 1a, 1b) tourne autour d'un axe de rotation (8) perpendiculairement à la direction d'enroulement (W).

3. Procédé selon l'une quelconque des revendications 1 ou 2, **caractérisé en ce que** le matériau en bande (1, 1a, 1b) est fourni sur une bobine (2, 2a, 2b) et est retiré de la bobine (2, 2a, 2b) par l'enroulement du matériau en bande (1, 1a, 1b) sur l'axe de bobinage (3).

4. Procédé selon la revendication 3, **caractérisé en ce que** la rotation de la bobine (2, 2a, 2b) est régulée lors du retrait du matériau en bande (1, 1a, 1b).

5. Procédé selon une ou plusieurs des revendications précédentes, **caractérisé en ce que** plusieurs bandes du matériau en bande (1, 1a, 1b) sont fournies, dans lequel chaque matériau en bande (1, 1a, 1b) présente une largeur qui est plus petite que la largeur prévue du demi-produit de ressort à lame.

6. Procédé selon l'une quelconque des revendications précédentes, **caractérisé en ce que** l'axe de bobinage (3) est déplacé lors de l'enroulement autour d'un trajet prévu sur l'axe de rotation (8).

7. Procédé selon la revendication 6, **caractérisé en ce que** l'axe de bobinage (3) est déplacé entre deux rotations autour d'un trajet qui est plus petit que la largeur du matériau en bande (1, 1a, 1b), le trajet correspondant de préférence à la moitié de la largeur du matériau en bande (1, 1a, 1b).

8. Procédé selon la revendication 6 ou 7, **caractérisé en ce que**, après un nombre déterminé de rotations, l'axe de bobinage (3) est déplacé dans le sens respectivement opposé de sorte que le matériau en bande (1, 1a, 1b) soit enroulé en chevauchements alternés.

9. Procédé selon une ou plusieurs des revendications précédentes, **caractérisé en ce qu'**avant, pendant ou après l'enroulement, des couches intermédiaires supplémentaires (13, 14) en matériau fibreux sont introduites dans le demi-produit de ressort à lame.

10. Procédé selon une ou plusieurs des revendications précédentes, **caractérisé en ce qu'**avant, pendant ou après l'enroulement, au moins un élément en matériau non fibreux, par exemple un métal ou un élastomère, est introduit dans le demi-produit de ressort à lame.

11. Procédé selon une ou plusieurs des revendications précédentes, **caractérisé en ce qu'**une force de pression (F), avec laquelle l'organe presseur (10) presse le matériau en bande (1, 1a, 1b), est réglée.

12. Procédé selon une ou plusieurs des revendications précédentes, **caractérisé en ce que** le matériau en bande (1, 1a, 1b) est pressée par un rouleau presseur comme organe presseur (10).

13. Procédé selon une ou plusieurs des revendications précédentes, **caractérisé en ce que**, dans une étape de procédé supplémentaire, le ressort à lame est soumis à un autre traitement thermique après la compression.

14. Agencement pour la fabrication d'un ressort à lame formé d'un matériau composite fibreux avec un dispositif (21) pour fournir un matériau en bande (1, 1a, 1b) en matériau fibreux pré-imprégné d'une résine matrice et un axe de bobinage (3), qui présente côté périphérique dans la direction d'enroulement au moins deux cavités (5, 6, 7) pour façonner un demi-produit de ressort à lame (22), ainsi qu'un organe presseur (10), par lequel des couches adjacentes du matériau en bande (1, 1a, 1b) peuvent être liées par adhésif sur l'axe de bobinage (3) et des poches d'air entre les couches adjacentes du matériau en bande (1, 1a, 1b) peuvent être éliminées et un outil pour comprimer le demi-produit de ressort à lame (22) en durcissant la résine matrice pour fabriquer un ressort à lame (20).

15. Agencement selon la revendication 14, **caractérisé en ce que** le matériau en bande (1, 1a, 1b) est fourni sur une bobine régulée (2, 2a, 2b), de sorte que le matériau en bande (1, 1a, 1b) puisse être enroulé sur l'axe de bobinage (3) sous tension.

16. Agencement selon la revendication 14 ou 15, **caractérisé en ce que** l'organe presseur (10) se présente sous la forme d'un rouleau presseur.

17. Agencement selon l'une quelconque des revendications 14 à 16, **caractérisé en ce qu'**une force de pression (F) de l'organe presseur (10) peut être réglée.

18. Agencement selon l'une quelconque des revendications 14 à 17, **caractérisé en ce que** l'axe de bobinage (3) pour l'enroulement du matériau en bande (1, 1a, 1b) peut tourner autour d'un axe de rotation (8) perpendiculairement à la direction d'enroulement (W).

19. Agencement selon l'une quelconque des revendications 14 à 18, **caractérisé en ce que** l'axe de bobinage (3) peut être déplacé dans la direction de l'axe de rotation (8).
